# EUROPEAN PATENT SPECIFICATION

(11) **EP 2 710 096 B1**
(45) Date of publication and mention of the grant of the patent: **08.01.2020**
(21) Application number: 12784918.0
(22) Date of filing: 16.05.2012
(51) Int. Cl.: C10L 5/44, C10L 9/08, F26B 23/00

(54) **METHOD AND AN ARRANGEMENT FOR EFFICIENT TORREFACTION OF BIOMASS**
VERFAHREN UND ANORDNUNG ZUR EFFIZIENTEN TORREFIZIERUNG EINER BIOMASSE
PROCÉDÉ ET AGENCEMENT POUR LA TORRÉFACTION EFFICACE D'UNE BIOMASSE

(30) Priority: 18.05.2011 SE 1150458
(43) Date of publication of application: 26.03.2014
(73) Proprietor: Bioendev AB, 901 05 Umeå (SE)
(72) Inventor: OLOFSSON, Ingemar, 905 80 Umeå (SE); NORDWAEGER, Martin, 906 42 Umeå (SE); NORDIN, Anders, 907 52 Umeå (SE); HÅKANSSON, Katarina, 914 32 Nordmaling (SE)
(74) Representative: Kransell & Wennborg KB
(86) International application number: PCT/SE2012/050531
(87) International publication number: WO 2012/158116

(56) References cited:
- WO-A1-2007/078199
- WO-A1-2007/078199
- WO-A1-2010/130988
- DE-B3-102005 038 135
- GB-A- 2 448 531
- US-A- 4 324 544
- US-A1- 2010 083 530
- US-A1- 2010 242 351
- US-A1- 2010 242 351

## Description

### Technical field

The present invention relates to the field of torrefaction of biomass. In particular, it relates to a method and an arrangement for efficient torrefaction of biomass.

### Background

To be able to compete with and replace fossil fuel energy carriers such as coal, oil and natural gas, lignocellulosic biomass would benefit from some form of pre-treatment method to overcome inherent drawbacks. The pre-treatment method torrefaction has been shown to improve biomass fuel qualities such as energy density, water content and milling, feeding and hydrophobic properties [1-4]. These improvements establish torrefaction as a key process in facilitating an expanding market for biomass raw materials. Torrefaction is a thermal pre-treatment method that normally takes place in a substantially inert (oxygen free) atmosphere at a temperature of about 220-600°C. During the process course a combustible gas comprising different organic compounds is produced from the biomass feedstock in addition to the torrefied biomass.

The process of producing a torrefied material from lignocellulosic biomass can be said to include four stages:
1) a drying step, wherein free water retained in the biomass is removed;
2) a heating step in which physically bound water is released and the temperature of the material is elevated to the desired torrefaction temperature;
3) a torrefaction stage, in which the material is actually torrefied and which starts when the material temperature reaches about 220°C -230°C. During this stage, the biomass partly decomposes and gives off different types of volatiles, such as hydroxy acetone, methanol, propanal, short carboxylic acids etc. In particular, the torrefaction stage is characterized by decomposition of hemicellulose at temperatures from 220°C -230°C, and at higher torrefaction temperatures cellulose and lignin also starts to decompose and give off volatiles; cellulose decomposes at a temperature of 305-375°C and lignin gradually decomposes over a temperature range of 250-500°C;
4) a cooling step to terminate the process and facilitate handling. The torrefaction process is terminated as soon as the material is cooled below 220°C-230°C.

US 2010/242351 discloses methods and systems for preparing a torrefied biomass fuel. Moisture is initially extracted from relatively wet biomass fuel to produce a relatively dry biomass fuel. Remaining moisture is then extracted from the relatively dry biomass fuel in a final drying stage, using steam at a temperature of about 900 °F. The resulting dried biomass fuel is conveyed downward using gravity and undergoes torrefaction, which produces torrefied biomass fuel and torrefaction gases. A gaseous mixture of steam and torrefaction gases is vented to a heat exchanger, where the gaseous mixture is heated by a flue gas, and the heated gaseous mixture is used to support the extraction of the remaining moisture in the final drying stage and to support the torrefaction of the dried biomass fuel.

US 2010/083530 discloses a method and apparatus for torrefaction of water containing cellulosic materials which is performed in an inert atmosphere. The cellulosic material is cascaded through the apparatus between a plurality of rotatable trays vertically stacked within multiple processing zones. Superheated steam generated from heating of the cellulosic material is recycled back to the apparatus to provide an inert atmosphere. Exhaust from the torrefaction zone of the apparatus is reheated in a burner, and the heated exhaust used in to superheat the recycled steam.

DE 10 2005 038135 B3 relates to a simple, mobile kiln for small-scale production of charcoal. The apparatus has a shaft with a grill at the bottom. Air inlets below the grill produce a fluidized bed of wood being treated. A water bath is mounted directly under the grill which cools the hot charcoal as it falls through.

### Summary of the present disclosure

In torrefaction of industrial scale, a simple, robust and yet energy efficient torrefaction arrangement will provide a major competitive advantage.

Thus the present disclosure provides a new method for torrefaction of a biomass

In one aspect the invention relates to torrefaction according to claim 1.

### Brief description of the figures

Figure 1 shows a system for torrefaction of biomass
Figure 2 shows a typical temperature variation over time in the torrefaction arrangement disclosed in figure 1.
Figure 3 shows a typical temperature variation over time in the torrefaction arrangement disclosed in figure 1.

### Definitions

Torrefaction:
   A pre-treatment, wherein a biomass, in a virtually inert (oxygen-reduced or oxygen free) atmosphere is heated to a temperature above 220 °C but below 600 °C to produce a torrefied biomass and torrefaction gases comprising combustible gases. Oxygen supplied to a torrefaction reaction in accordance with an embodiment of the present invention, is supplied in such a manner and/or in such an amount that it not, to a substantial degree, reacts with the biomass. Instead, such oxygen reacts with the torrefaction gases. During a torrefaction stage, parts of the biomass, in particular hemicellulose, decompose and give off different types of organic volatiles. In a torrefaction process starting from raw, wet biomass, the actual torrefaction stage is preceded by a drying stage wherein free water retained in the biomass is removed and by a heating stage wherein the biomass is heated to the desired torrefaction temperature.
Heating zone:
   A specific region of a compartment in a torrefaction reactor, located upstream of a torrefaction zone in relation to a biomass inlet of a torrefaction reactor, comprising means for specifically regulating the temperature in said specific region and wherein the temperature of a biomass is increased to a temperature near the desired torrefaction temperature prior to torrefaction.
Torrefaction zone:
   A specific region of a compartment in a torrefaction reactor, located downstream of a heating zone in relation to a biomass inlet of a torrefaction reactor, comprising means for specifically regulating the temperature in said specific region and wherein the temperature of a previously heated biomass is kept virtually constant at the desired torrefaction temperature for a desired torrefaction time wherein a desired torrefaction temperature is in a range between 220 °C to 600 °C.
Drying zone:
   A specific region of a compartment in a torrefaction reactor, located upstream of a heating zone in relation to a biomass inlet of a torrefaction reactor, comprising means for regulating the temperature in said specific region and wherein a biomass is dried to a water content below 10 % prior to heating.
Torrefaction time:
   The time the temperature of the material is kept virtually constant at the torrefaction temperature. The residence time of the material in the torrefaction zone may be referred to as the torrefaction time.
Horizontal:
   The meaning of the term horizontal in the present disclosure is the same as it would be interpreted by the skilled person i.e. a plane perpendicular to a vertical plane and parallel to the plane of the horizon. However in the present disclosure a plane deviating with a small angle (such as 10°) from the horizontal plane is also referred to as horizontal. Thus e.g. the expression "a horizontal heating chamber" also includes heating chambers which deviate with a small angel (such as 10°) from the horizontal plane.
Vertical:
   The meaning of the term vertical in the present disclosure is the same as it would be interpreted by the skilled person i.e. a plane perpendicular to a horizontal plane. However in the present disclosure a plane deviating with a small angle (such as 10°) from the vertical plane is also referred to as vertical. Thus e.g. the expression "a vertical reactor" also includes reactors which deviate with a small angel (such as 10 °) from the vertical plane.

### Detailed description

In a first aspect the invention relates to a method for torrefaction of a pre-dried biomass, according to claim 1.

This method has several advantages compared to the methods described in the prior art. Since the dried and heated biomass is fed into the torrefaction zone at its top and the torrefied material is withdrawn from the torrefaction zone at its bottom, no moveable parts are needed in the torrefaction zone. Instead, the material moves through the torrefaction zone by means of gravity. This provides for a simple and thus cheap construction. Further, such a construction provides for an energy-efficient torrefaction process: no heating means are needed at the torrefaction zone. It is sufficient that the torrefaction zone is insulated such that the temperature range reached during the heating step is maintained.

The residence time of the material in the torrefaction zone is determined by the height (or volume, if cross-section area not constant) of the bed of material in the torrefaction zone and the rate by which the material is withdrawn from the bottom. The withdrawal rate may for example be controlled by controlling the speed of a transport device, such a transport screw, arranged at the bottom of the torrefaction zone. The height of the bed depends on the initial degree of filling, the withdrawal rate at the bottom and the feeding rate at the top. If the feeding rate at the top is higher than the withdrawal rate at the bottom, the height will increase, and if the withdrawal rate at the bottom is higher than the feeding rate at the top, the height will decrease. The residence time of the material in the torrefaction zone may be controlled in order to control the degree of torrefaction of the material. Thus, the initial degree of filling of the torrefaction zone, the feeding rate to the top of the torrefaction zone and/or the withdrawal rate from the bottom of the torrefaction zone may be controlled to control the degree of torrefaction of the material.

Thus, the torrefied material is withdrawn from the bottom by means of a transport screw, and the speed of the transport screw can be controlled in order to control the residence time of the material in the torrefaction zone.

In one embodiment at least one sensor in the torrefaction zone reads the height of the bed in the torrefation zone. In one embodiment the reading from said sensor is used to control the residence time of the biomass in the torrefaction zone. In one embodiment the reading from the sensor is compared to a reference value and if the reading deviates from the reference value with more than a predetermined error value, the withdrawal rate from the bottom of the torrefaction zone and/or the feeding rate at the top of the torrefaction zone is adjusted.

In one embodiment the torrefaction temperature range is within 240-350 °C most preferably 270-350 °C.

The temperature is preferably kept relatively constant in the torrefaction zone to facilitate a controlled torrefaction process. Thus, the torrefaction temperature range, which is reached in step a) and maintained in step b), is preferably a range of 50 °C or less. Thus, the torrefaction temperature range may for example be 300-350 °C or 350-400 °C. More preferably, the temperature range is a range of 40 °C or less, such as 30 °C or less, such as 20 °C or less, such as 10 °C or less.

The heating zone and the torrefaction zone may be separated such that the residence time of the material in the different zones may be controlled separately. For example, the material may be transported through the heating zone by means of a transport device, such as a conveyor belt or a transport screw. Thus, the speed of such a transport device may be controlled to control the residence time of the material in the heating zone. In a preferred embodiment the biomass is transported through the heating zone in a horizontal direction. The control of the residence time of the material in the torrefaction zone is discussed above.

Preferably the torrefaction zone is isolated to such an extent that no external energy has to be provided in the torrefaction zone. The temperature may thus be kept substantially constant in the torrefaction zone due to the isolation and due to the exothermal-heat generated by the biomass during the torrefaction reaction.

The inventors have also discovered that the temperature in the torrefaction zone can be regulated by injection of a controlled amount of air or oxygen into the torrefaction zone. The injected air/oxygen reacts with gases released from the biomass during the torrefaction stage. When the gases partly oxidize, heat is released to the surrounding gas and the material to be torrefied, thereby boosting the temperature without further supply of external heating. The inventors have surprisingly been able to demonstrate that it is possible to keep a controlled temperature in the torrefaction arrangement despite that oxygen is introduced (data not shown). The inventors have even shown that the temperature in the torrefaction zone can be controlled by controlling the amount of injected oxygen (data not shown), which eliminate the need for supplying external heating to the torrefaction zone. The fact that the temperature in the torrefaction arrangement could be kept stable and controlled in the presence of oxygen and without oxidation of the biomass is surprising, especially in light of the torrefaction processes described in the prior art where efforts have been made to ensure that the torrefaction process is performed in an oxygen depleted manner. Therefore, in one embodiment an oxygen-containing gas is supplied to the torrefaction zone.

The present inventors have been able to demonstrate that, compared to supplying the oxygen-containing gas at the bottom of the torrefaction zone, it is easier to control the temperature in the torrefaction zone if the oxygen-containing gas is supplied at the bottom of the torrefaction zone and if torrefaction gases are withdrawn from the torrefaction zone at the top of the torrefaction zone such that gases move upstream through the torrefaction zone, countercurrent to the biomass transport.

Therefore, in a preferred embodiment the oxygen-containing gas is supplied to a first position in the torrefaction zone such that oxygen reacts with components of torrefaction gases under the formation of heat and wherein torrefaction gases are withdrawn from the torrefaction reactor at a second position of the torrefaction reactor and wherein the first position is located downstream of the second position in relation to a biomass transport direction in the torrefaction zone such that the torrefaction gases moves through the torrefaction zone countercurrent to the biomass transport.

In one embodiment the oxygen-containing gas is supplied at the bottom of the torrefaction zone such that oxygen reacts with components of the torrefaction gases under the formation of heat and wherein torrefaction gases are withdrawn from the torrefaction zone at the top of the torrefaction zone such that the torrefaction gases moves through the torrefaction reactor countercurrent to the biomass transport. In one embodiment the oxygen-containing gas is supplied in a position located in the lowest 20 %, preferably lowest 5 %, preferably lowest 1 % of the torrefaction zone and the torrefaction gases are withdrawn from a position corresponding to the highest 20 % preferably highest 5 %, preferably highest 1 % of the torrefaction zone.

The oxygen-containing gas is supplied to the torrefaction zone and the torrefaction gases are withdrawn from the heating zone such that the torrefaction gases moves through both the torrefaction zone and through the heating zone countercurrent to the biomass transport. In one embodiment the torrefaction gases are withdrawn from a position corresponding to the first 20 % preferably first 5 %, preferably first 1 % of the heating zone. In this sense "first 20 %" means the 20 % closest to the biomass inlet of the heating zone. In one embodiment the oxygen-containing gas is supplied in a position located in the lowest 20 %, preferably lowest 5 %, preferably lowest 1 % of the torrefaction zone. Thereby the heat generated by the reaction between oxygen and torrefaction gases in the torrefaction zone can be used for drying and heating the biomass in the heating zone. Since the torrefaction gases is drawn countercurrent in relation to the biomass transport, the present inventors have realized that it is possible to inject additional oxygen in the top of the torrefaction zone to boost the temperature in the heating zone without getting a too high temperature in the torrefaction zone. Thus, in one embodiment additional oxygen is added at the top of the torrefaction zone or in a region corresponding to the highest 10 %, preferably highest 5 %, preferably highest 1 % of the torrefaction zone.

In an alternative embodiment the oxygen-containing gas is supplied to the torrefaction zone at its top, such that oxygen reacts with components of torrefaction gases formed in the torrefaction zone under the formation of heat and wherein an underpressure is provided at the bottom of the torrefaction zone such that gases move downwards through the torrefaction zone. This embodiment is however less preferred since the present inventors have demonstrated that it is harder keep a stable temperature in the torrefaction zone when the oxygen-containing gas is supplied at the top of the reactor and when the gases are moving concurrently with the biomass within the torrefaction zone.

The heat generated by the reaction is distributed throughout the biomass bed in the torrefaction zone. The use of oxygen for boosting the temperature in the torrefaction zone is energy efficient and facilitates efficient control of torrefaction temperature without the need of supplying external energy to the torrefaction zone.

In one embodiment, a fraction of hot gases generated by the reaction between oxygen and torrefaction gases in the torrefaction zone is diverted from the top of the torrefaction zone and routed to the heating zone and/or drying zone, to boost the temperature in the heating zone and/or drying zone.

In one embodiment the biomass is lignocellulosic biomass, such as a wood material, e.g. wood chips.

An aspect not part of the invention relates to a system for torrefaction of biomass, comprising:
a first zone for heating of an optionally pre-dried biomass; and an insulated second zone for torrefying the heated biomass, said second zone having an inlet being connected to an outlet of the first zone, means for withdrawing torrefied biomass arranged at the bottom of the second zone, such that the biomass can move downwards through the second zone by means of gravity, wherein means for heating are arranged at the first zone, but not at the second zone.

In one embodiment the first zone is arranged in a heating chamber comprising a screw or belt for transporting the biomass through the first zone.

In another embodiment the heating chamber is horizontal and the screw or belt extends in a horizontal direction for horizontal transport of the biomass. In another embodiment the heating chamber is parallel to the horizontal plane or deviates from the horizontal plane with an angle smaller than 45°, such as smaller than 40°, such as smaller than 35°, such as smaller than 30°, such as smaller than 25°, such as smaller than 20°, such as smaller than 15°.

In one embodiment the insulated second zone is arranged in a vertical reactor. In one embodiment the insulated second zone is arranged in a reactor which is parallel to the vertical plane or deviates from the vertical plane with an angle smaller than 45°, such as smaller than 40° such as smaller than 35° such as smaller than 30°, such as smaller than 25° such as smaller than 20° such as smaller than 15°.

In one embodiment the second zone comprises at least one oxygen inlet for injection of an oxygen-containing gas to the second zone. In one embodiment the oxygen inlet is connected to oxygen supply means for a controlled supply of an oxygen-containing gas to the second zone. In one embodiment the second zone comprises an outlet for torrefaction gases. In one embodiment the outlet for torrefaction gases is located upstream of the oxygen inlet in relation to a biomass transport direction within the second zone. In a preferred embodiment the outlet for torrefaction gases is located in the first zone, preferably at a position corresponding to the first 20 % preferably first 5 %, preferably first 1 % of the first zone, in relation to the biomass inlet. In one embodiment the system further is comprising a source of the oxygen-containing gas, which source is connected to the oxygen supply means.

In one embodiment the oxygen inlet is arranged at the lowest 20 %, preferably lowest 5 %, preferably lowest 1 % of the second zone. In one embodiment the outlet for torrefaction gases is arranged at the highest 20 % preferably highest 5 %, preferably highest 1 % of the second zone.

In one embodiment the outlet for torrefaction gases is arranged in the first zone such that torrefaction gases are draw counter current with the biomass transport through both the first and the second zone. Preferably the outlet for torrefaction gases is located in a region corresponding to the first 20 % of the first zone, preferably first 5 %, preferably first 1 % of the first zone.

In an alternative embodiment the oxygen inlet is arranged at the top of the second zone and a fan is arranged in connection to the bottom of the second zone such that an underpressure may be provided at the bottom of the second zone. Thus, the gases may be drawn through the second zone. In one embodiment the system comprises a source of the oxygen-containing gas, which source is connected to the oxygen supply means

In one embodiment the second zone comprises at least one sensor for measuring the level of biomass within the second zone. Said measured value could be used to control the residence time of the biomass in the second zone.

### Detailed description of exemplary embodiments

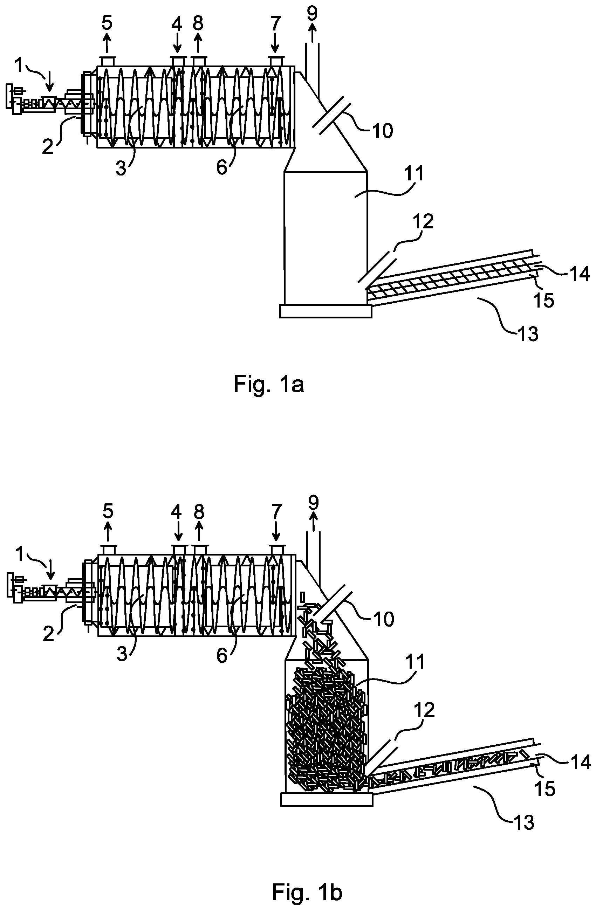

Figure 1a shows a system for a method for of biomass having a biomass inlet (1) wherein the biomass is introduced in the torrefaction arrangement by means of a feeding screw (2). The biomass is dried in a drying zone (3). Heat is supplied to the drying zone (3) by means of a heating media (e.g. hot gases) through a drying zone heating media inlet (4). The heating media leaves the drying zone through the drying zone heating media outlet (5). Dried biomass is transported from drying zone (3) into a heating zone (6) where the temperature of the biomass is elevated to the torrefaction temperature range. The heat is supplied to the heating zone (6) by means of a heating media through a heating zone heating media inlet (7). The heating media leaves the heating zone (6) through a heating zone heating media outlet (8). The drying zone (3) and heating zone (6) are both located in a common horizontal reactor and the material transport in the drying zone (3) and heating zone (6) is mediated by a common transport screw which also feeds the material to the top of a vertical reactor comprising the torrefaction zone (11). Torrefied material is withdrawn from the torrefaction zone at its bottom, such that the biomass moves downwards through the torrefaction zone (11) by means of gravity. No external heat is supplied in the torrefaction zone (11) and the torrefaction temperature is monitored by measuring the surface temperature of the biomass using a first IR-thermometer (10) at the top of the torrefaction zone and a second IR-thermometer (12) at the bottom of the torrefaction zone (11). The temperature of the biomass in the torrefaction zone (11) can be adjusted by injection of oxygen-containing gas at the top of the torrefaction zone (11), such that oxygen reacts with components of torrefaction gases formed in the torrefaction zone under the formation of heat. An underpressure is provided at the bottom of the torrefaction zone such that gases move downwards through the torrefaction zone (11). The heat generated by the reaction with the oxygen is thus distributed throughout the biomass bed in the torrefaction zone (11). A cooling zone transport screw (14) moves the torrefied material from the bottom of the torreffaction zone (11) through a cooling zone (13) where the torrefied material is cooled to a temperature below 100 °C by means for cooling (15). Cooling could also be supplied via the transport screw (14). The residence time of the biomass in the torrefaction zone is determined by the speed of the rotation speed of the cooling zone transport screw (14) and by the height of the bed in the torrefaction zone (14). The height of the bed in the torrefaction zone (11) is determined by the rate of material transport into the torrefaction zone, and by the rate at which the material transported out of the torrefaction zone (11). The rate of material transport into the torrefaction zone (11) is determined by the rotation speed of the transport screw in the drying zone (3) and heating zone (6), and the rate of material transport out of the torrefaction zone is determined by the rotation speed of the cooling zone transport screw (14).

Figure 1b shows the same system for torrefaction as in figure 1 when biomass is present in the system.

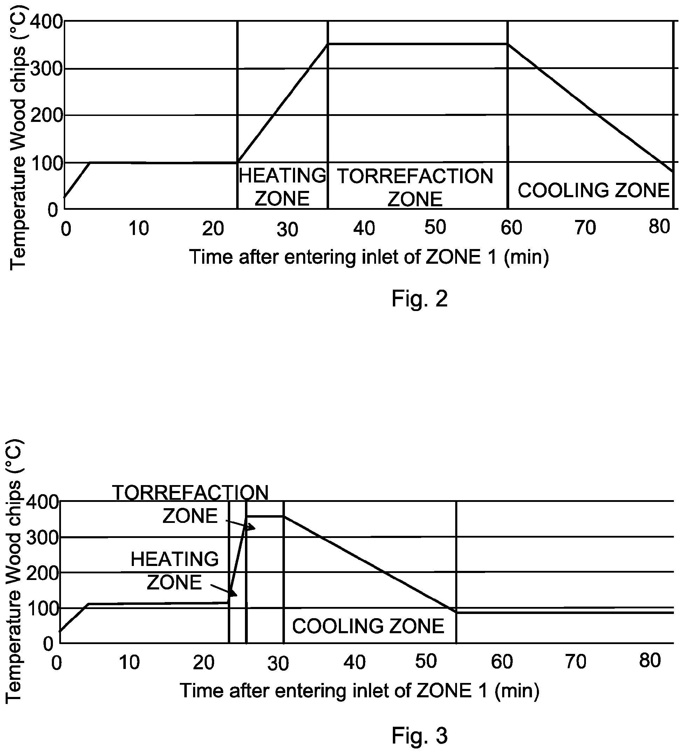

Figure 2 and 3 show typical temperature variation over time in the torrefaction arrangement disclosed in figure 1. Despite that no external energy is supplied in the torrefaction zone, the temperature in the torrefaction zone is kept constant. If the temperature would decrease, oxygen can be injected at the top of the torrefaction zone to boost the temperature.

## Claims

1. A method for torrefaction of pre-dried wood chips, comprising the steps of:
a) heating the pre-dried wood chips in at least one heating zone such that the temperature of the wood chips reaches a torrefaction temperature range within 240-400 °C, wherein the wood chips are transported through the heating zone in a horizontal direction; and
b) torrefying the heated wood chips from step a) in a torrefaction zone by maintaining the temperature within the torrefaction temperature range,
wherein the heated wood chips from step a) is fed to the torrefaction zone at its top and torrefied material is withdrawn from the torrefaction zone at its bottom, such that the wood chips moves downwards through the torrefaction zone by means of gravity, and wherein the temperature in the torrefaction zone is regulated by injection of a controlled amount of air or oxygen into the torrefaction zone and
wherein the torrefied material is withdrawn from the bottom by means of a transport screw and wherein the speed of the transport screw is controlled to control the residence time of the material in the torrefaction zone.

2. Method according to claim 1, wherein the oxygen-containing gas is supplied to the torrefaction zone such that oxygen reacts with components of torrefaction gases under the formation of heat and wherein torrefaction gases are withdrawn from the heating zone such that the torrefaction gases moves through the torrefaction zone and through the heating zone countercurrent to the wood chips transport.

3. A method according to anyone of claims 1-2, wherein the torrefaction temperature range is within 240-350 °C, preferably 270-350 °C.

## Patentansprüche

1. Verfahren zur Torrefizierung von vorgetrockneten Holzspänen, umfassend die Schritte des:
a) Erhitzens der vorgetrockneten Holzspäne in mindestens einer Heizzone, derart, dass die Temperatur der Holzspäne einen Torrefizierungstemperaturbereich innerhalb von 240-400 °C erreicht, wobei die Holzspäne durch die Heizzone in einer horizontalen Richtungen transportiert werden; und
b) Torrefizierens der erhitzten Holzspäne aus Schritt a) in einer Torrefizierungszone durch Halten der Temperatur innerhalb des Torrefizierungstemperaturbereichs,
wobei die erhitzten Holzspäne aus Schritt a) zu der Torrefizierungszone an ihrem oberen Ende geführt werden und torrefiziertes Material aus der Torrefizierungszone an ihrem Boden abgezogen wird, derart, dass die Holzspäne sich abwärts durch Schwerkraft durch die Torrefizierungszone bewegen und wobei die Temperatur in der Torrefizierungszone durch Injektion einer regulierten Menge Luft oder Sauerstoff in die Torrefizierungszone reguliert wird und
wobei das torrefizierte Material vom Boden durch eine Transportschnecke abgezogen wird und wobei die Geschwindigkeit der Transportschnecke zum Regulieren der Aufenthaltszeit des Materials in der Torrefizierungszone reguliert wird.

2. Verfahren nach Anspruch 1, wobei das sauerstoffhaltige Gas zu der Torrefizierungszone derart geliefert wird, dass Sauerstoff mit Komponenten von Torrefizierungsgasen unter Bildung von Wärme reagiert und wobei Torrefizierungsgase aus der Heizzone derart abgezogen werden, dass die Torrefizierungsgase sich durch die Torrefizierungszone und durch die Heizzone im Gegenstrom zum Holzspänetransport bewegen.

3. Verfahren nach einem der Ansprüche 1-2, wobei der Torrefizierungstemperaturbereich innerhalb 240-350 °C, bevorzugt 270-350 °C liegt.

## Revendications

1. Procédé de torréfaction de copeaux de bois pré-séchés, comprenant les étapes de :
a) chauffer les copeaux de bois pré-séchés dans au moins une zone de chauffage de telle manière que la température des copeaux de bois atteint une plage de température de torréfaction dans les 240 à 400 °C, où les copeaux de bois sont transportés à travers la zone de chauffage dans une direction horizontale ; et
b) torréfier les copeaux de bois chauffés de l'étape a) dans une zone de torréfaction en maintenant la température dans la plage de température de torréfaction,
où les copeaux de bois chauffés de l'étape a) sont alimentés à la zone de torréfaction à sa partie supérieure et le matériau torréfié est retiré de la zone de torréfaction à sa partie inférieure, de telle manière que les copeaux de bois se déplacent vers le bas à travers la zone de torréfaction au moyen de la gravité, et où la température dans la zone de torréfaction est régulée par injection d'une quantité contrôlée d'air ou d'oxygène dans la zone de torréfaction et
où le matériau torréfié est retiré de la partie inférieure au moyen d'une vis de transport et où la vitesse de la vis de transport est contrôlée pour contrôler le temps de résidence du matériau dans la zone de torréfaction.

2. Procédé selon la revendication 1, dans lequel le gaz contenant de l'oxygène est approvisionné à la zone de torréfaction de telle manière que l'oxygène réagit avec les composants des gaz de torréfaction sous la formation de chaleur et où les gaz de torréfaction sont retirés de la zone de chauffage de telle manière que les gaz de torréfaction se déplacent à travers la zone de torréfaction et à travers la zone de chauffage en contre-courant au transport des copeaux de bois.

3. Procédé selon l'une quelconque des revendications 1 à 2, dans lequel la plage de température de torréfaction se situe dans les 240 à 350 °C, de préférence 270 à 350 °C.
